(19) **Europäisches Patentamt / European Patent Office / Office européen des brevets**

(11) **EP 3 491 320 B1**

(12) **FASCICULE DE BREVET EUROPEEN**

(45) Date de publication et mention de la délivrance du brevet:
**24.02.2021 Bulletin 2021/08**

(21) Numéro de dépôt: **17746054.0**

(22) Date de dépôt: **25.07.2017**

(51) Int Cl.:
*F28D 20/00* (2006.01)    *C09K 5/14* (2006.01)
*F24D 17/00* (2006.01)    *B28B 19/00* (2006.01)
*C04B 35/565* (2006.01)

(86) Numéro de dépôt international:
**PCT/EP2017/068812**

(87) Numéro de publication internationale:
**WO 2018/019858 (01.02.2018 Gazette 2018/05)**

(54) **ÉCHANGEUR DE CHALEUR POUR CAPTEUR SOLAIRE THERMIQUE**

WÄRMETAUSCHER FÜR EINEN THERMISCHEN SONNENKOLLEKTOR

HEAT EXCHANGER FOR A THERMAL SOLAR COLLECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2016 BE 201605621**

(43) Date de publication de la demande:
**05.06.2019 Bulletin 2019/23**

(73) Titulaire: **Cesi Power Exchanger
7536 Tournai (Vaulx) (BE)**

(72) Inventeurs:
• **PAULUS, Alain
7141 Morlanwelz (Carnières) (BE)**
• **CAPIAU, Dany
7536 Tournai (Vaulx) (BE)**

(74) Mandataire: **Sayettat, Julien Christian
Strato-IP
63, Boulevard de Ménilmontant
75011 Paris (FR)**

(56) Documents cités:
WO-A1-2014/057014     WO-A1-2015/133381
DE-U1-202013 005 661   JP-A- H0 275 852
JP-A- H03 160 272      US-A1- 2007 039 715
US-A1- 2014 000 835

• DATABASE EPODOC [Online] EUROPEAN PATENT OFFICE, THE HAGUE, NL; XP002768178, Database accession no. CN-201010105255-A -& CN 101 738 120 A (INST ELECTRICAL ENG CAS) 16 juin 2010 (2010-06-16)
• DATABASE WPI Section PQ, Week 201366 Thomson Scientific, London, GB; Class Q78, AN 2013-P26068 XP002768179, -& JP 2013 194927 A (DOKURITSU GYOSEI HOJIN SANGYO GIJUTSU SO) 30 septembre 2013 (2013-09-30)

## Description

ECHANGEUR DE CHALEUR POUR CAPTEUR SOLAIRE THERMIQUE

L'invention concerne un échangeur de chaleur adapté aux installations comportant un capteur solaire thermique, telles que les installations de captation de l'énergie solaire qui font appel à des panneaux solaires thermiques. L'invention concerne également un procédé de fabrication et une utilisation d'un tel échangeur.

On connait le brevet US 7,441,558 B2 qui divulgue l'emploi d'un système de stockage de l'énergie thermique fournie par un panneau solaire thermique basée sur le changement de phase solide/liquide d'un composé ayant un point de fusion supérieur à 32 °C et une chaleur latente de fusion proche de celle de l'eau. Des clathrates tels que formés par le fluorure de tétra n-butyl ammonium avec l'eau sont employés. La température maximale du système de stockage tolérable pour ces matériaux est limitée par la température de décomposition de ces composés.

DE 202013005661 U1 divulgue un système de ventilation comprenant un système d'accumulateur de chaleur prévu pour un collecteur de chaleur solaire. Le système d'accumulateur de chaleur est doté d'un accumulateur de chaleur à eau et d'un accumulateur de chaleur en matériau solide.

L'invention a pour objectif de fournir un échangeur de chaleur et un procédé pour le fabriquer qui accepte pour la partie primaire des températures élevées du fluide caloporteur en provenance des panneaux solaires thermiques et permet aussi un stockage de grande capacité de l'énergie thermique fournie à la partie primaire. L'invention concerne un échangeur de chaleur pour capteur solaire thermique comprenant une surface d'échange primaire pouvant être connectée avec au moins un capteur solaire thermique et au moins une première surface d'échange secondaire pouvant être connectée à un circuit utilisateur, la surface d'échange primaire étant noyée dans un matériau de haute capacité thermique comprenant une masse de carbure de silicium pour former un noyau, la première surface d'échange secondaire étant noyée dans un béton comprenant du carbure de silicium, ledit béton et ladite première surface d'échange secondaire entourant ledit noyau.

Ainsi, l'échangeur présente :

- un noyau enrobant la surface d'échange primaire en étant apte à diffuser un rayonnement thermique du fait de l'utilisation du carbure de silicium ;
- au moins une couche périphérique béton de carbure de silicium - surface d'échange secondaire qui est apte à stocker le rayonnement thermique diffusé par le noyau et à le restituer au circuit utilisateur auquel ladite surface secondaire est connectée.

Par échangeur de chaleur pour capteur solaire thermique, on entend un échangeur adapté à la récupération et au stockage de l'énergie thermique véhiculée par un fluide caloporteur circulant dans et en provenance d'un panneau solaire muni d'au moins un capteur solaire thermique.

Comme tous les échangeurs, l'échangeur conforme à l'invention comprend une partie primaire comprenant un circuit réalisant une surface d'échange primaire et une partie secondaire comprenant au moins un circuit secondaire réalisant au moins une surface d'échange secondaire. Selon l'invention, les circuits secondaires de l'échangeur sont en connexion avec des circuits utilisateurs de chaleur. Les surfaces d'échange de ces circuits primaire et secondaires sont noyées dans un matériau de haute capacité thermique comprenant du carbure de silicium. Ce matériau possède une haute diffusivité thermique et en même temps une haute effusivité thermique.

Par diffusivité thermique D, ou aptitude à déplacer rapidement des calories à travers la masse d'un matériau, on désigne :

$$D = \lambda/\rho c$$

où :

D est la diffusivité en $m^2/s$ ;
λ est la conductivité thermique du matériau en W/m. K ;
ρ est la masse volumique du matériau en $kg/m^3$ ;
et c la capacité thermique massique du matériau en J/kg.K.

Par effusivité thermique E, ou aptitude du matériau à absorber rapidement des calories, on désigne :

$$E = \sqrt{\lambda \rho c}$$

où :

E est l'effusivité en $J/K.m^2.s^{1/2}$ ;
λ est la conductivité thermique du matériau en W/m. K ;
ρ est la masse volumique du matériau en $kg/m^3$ ;
et c la capacité thermique massique du matériau en J/kg.K.

Dans une première forme de réalisation, l'échangeur selon l'invention comprend plusieurs surfaces d'échange secondaire qui sont connectées à divers circuits utilisateurs. Au moins un des circuits utilisateurs est sélectionné parmi les types suivants :

- un circuit producteur d'eau chaude ;
- un circuit de chauffage par pompe à chaleur ; et
- un circuit de récupération calorifique de ventilation.

Plusieurs circuits utilisateurs peuvent être des circuits d'un même type.

Dans une autre forme de réalisation, l'échangeur selon l'invention comprend au moins deux surfaces d'échange secondaire qui sont connectées à des circuits utilisateurs de nature différente sélectionnés parmi :

- un circuit producteur d'eau chaude ;
- un circuit de chauffage par pompe à chaleur ; et
- un circuit de récupération calorifique de ventilation.

Dans une autre forme de réalisation encore, l'échangeur selon l'invention comprend au moins trois surfaces d'échange secondaire qui sont connectées à des circuits utilisateurs de nature différente sélectionnés parmi :

- un circuit producteur d'eau chaude ;
- un circuit de chauffage par pompe à chaleur ; et
- un circuit de récupération calorifique de ventilation.

Dans encore une autre forme de réalisation compatible avec les formes de réalisation précédentes, au moins une résistance électrique chauffante est en outre noyée dans la masse du matériau de haute capacité thermique en CSi.

Selon différents modes de réalisation, l'échangeur selon l'invention peut présenter au moins l'une des caractéristiques suivantes :

- le noyau comprend un mélange homogène de carbure de silicium et d'une résine de contact ;
- la surface d'échange primaire est formée d'un serpentin tubulaire, notamment en acier inoxydable ;
- la première surface d'échange secondaire est formée d'un serpentin tubulaire, notamment en acier inoxydable, qui est disposé en périphérie du noyau ;
- le béton de carbure de silicium comprend un mélange homogène de carbure de silicium et d'un mortier de ciment ;
- il comprend au moins une deuxième surface d'échange secondaire, notamment plusieurs autres surfaces d'échanges secondaire connectées chacune à un circuit utilisateur, en particulier :

    ◦ au moins une des autres deuxièmes surfaces d'échange secondaire est noyée dans un matériau de haute capacité thermique comprenant du carbure de silicium ;
    ◦ la deuxième surface d'échange secondaire entoure le béton ;
    ◦ les surfaces d'échange secondaire sont connectées à des circuits utilisateurs de nature différente ;

- au moins une résistance électrique chauffante est noyée dans le béton et/ou dans l'éventuel matériau dans lequel au moins une deuxième surface d'échange secondaire est noyée.

L'invention concerne aussi un procédé de fabrication de l'échangeur conforme à l'invention, , selon lequel on effectue les étapes suivantes :

- introduction et fixation de la surface d'échange primaire dans un premier moule ;
- coulée de granules de carbure de silicium dans ledit premier moule pour former le noyau ;
- démoulage du noyau de l'échangeur ;
- fixation de la première surface d'échange secondaire en périphérie du noyau ;
- introduction et fixation dans un deuxième moule de l'ensemble première surface d'échange secondaire et noyau ;
- coulée dans l'espace entre le noyau et le deuxième moule d'un mélange homogène de granules de carbure de silicium et d'un mortier de ciment ;
- étuvage de l'ensemble deuxième moule / mortier de ciment avec granules de carbure de silicium / première surface d'échange secondaire / noyau, pour former un béton de carbure de silicium autour du noyau et de la première surface d'échange secondaire ;
- démoulage de l'ensemble béton / première surface d'échange secondaire / noyau afin d'obtenir un échangeur comprenant au moins une première surface d'échange secondaire entourant la surface d'échange primaire dans son noyau.

La forme des moules peut être celle d'un corps creux allongé muni d'un seul fond. Des formes parallélépipédique et cylindrique conviennent bien, la forme cylindrique donnant lieu à un échangeur cylindrique a donné de bons résultats.

Un serpentin tubulaire formant la surface d'échange primaire peut être réalisé dans un matériau robuste bon conducteur de la chaleur et capable de supporter les hautes températures du fluide caloporteur des panneaux solaires thermiques. Il doit aussi posséder une haute résistance à la corrosion à haute température en présence de ce fluide. Le cuivre ou l'acier inoxydable conviennent bien pour cet usage, par exemple les aciers inox austénitiques au molybdène UNS (Unified Numbering System) S31600 et S31603.

Le fluide caloporteur est adapté à la gamme de températures régnant dans le circuit primaire. On peut ainsi utiliser de l'éthylène glycol ou du propylène glycol pour des températures modérées jusqu'à 200°C. Pour des températures plus élevées, on préfère utiliser des compositions d'hydrocarbures à changement de phase solide/liquide dans des tubes sous vide. Des spécialités d'hydrocarbures exemptes de composés aromatiques, comme par exemple le fluide CALFLO® HT de la firme Petro Canada. Ce dernier permet des températures de fonctionnement de l'ordre de 300°C.

Les granules de CSi utilisés dans le procédé conforme à l'invention peuvent se présenter sous une granulométrie variée. On préfère cependant utiliser des grains de forme cubique de 0,1 à 10 mm. De manière plus préférée, on utilise des grains dont au moins 65 % en poids passent au tamis de mailles de 1 mm.

Les granules utilisés pour le noyau sont de préférence purs. On peut aussi les mélanger avec de 0,5 à 1 % en poids d'une résine de contact. Une telle résine a pour but d'agglomérer les granules dans le moule et peut être indifféremment du lignosulfonate de magnésium, du gluconate de sodium, de la dextrine, de l'amidon, du sirop de glucose, de la mélasse et de la vinasse et leurs mélanges en proportions variées. Le lignosulfonate de magnésium a donné de bons résultats.

La première surface d'échange secondaire peut être matérialisée par un serpentin. Ce serpentin peut être réalisé en différentes matières, comme le cuivre ou l'acier inoxydable. Un acier inox du même type que celui du serpentin de la surface d'échange primaire convient bien.

Le mortier de ciment utilisé pour fabriquer le béton de carbure de silicium autour du noyau est un mortier réalisé avec, comme matières sèches : de 8 à 12 % en poids de ciment Portland et de 88 à 92 % en poids de granules de carbure de silicium de granulométrie semblable à celle utilisée pour le noyau.

L'étuvage peut être réalisé dans une enceinte où règne une température de 200 à 500°C, pendant une durée de 120 min. La température d'étuvage de 400°C est préférée.

Selon une réalisation du procédé, le premier moule est un moule perdu réalisé en béton armé de carbure de silicium.

Le béton armé de carbure de silicium a la même composition que le béton utilisé dans le premier procédé.

Selon une réalisation, le procédé prévoit une dernière étape consistant à ajouter au moins une deuxième surface d'échange secondaire à l'échangeur en cours de fabrication.

On peut réaliser cette deuxième surface d'échange secondaire en effectuant les étapes suivantes :

- introduction dans l'axe d'un troisième moule et fixation dans ce moule du premier échangeur obtenu à l'issu des étapes précédentes ;
- introduction dans l'espace entre le troisième moule et le premier échangeur d'au moins un deuxième serpentin de tubes représentant une deuxième surface d'échange secondaire et fixation de cette deuxième surface d'échange ;
- coulée dans ce dernier espace d'un mélange homogène de granules de carbure de silicium et d'un mortier de ciment ;
- étuvage de l'ensemble troisième moule - deuxième surface d'échange secondaire - premier échangeur ;
- démoulage de l'ensemble constituant un deuxième échangeur, celui-ci comprenant deux surfaces d'échange secondaire.

De façon avantageuse, le deuxième serpentin de tubes de la deuxième surface d'échange secondaire est réalisé en matière plastique. Parmi les plastiques utilisables, on trouve les polymères fluorés ou chlorés et les polyoléfines haute densité telles que le polyéthylène haute densité.

Le mortier de ciment et les granules de carbure de silicium ont une composition et une granulométrie semblables à celles exposées plus haut.

Selon un autre mode de réalisation du procédé conforme à l'invention, on ajoute au moins une troisième surface d'échange secondaire en intercalant avant la coulée, l'étape consistant à introduire en outre et à fixer dans l'espace entre le troisième moule et l'échangeur au moins un faisceau de tubes représentant une troisième surface d'échange secondaire.

Le faisceau de tubes de la troisième surface d'échange secondaire peut être réalisé en différentes matières. Un matériau ayant donné de bons résultats a été l'aluminium, par exemple de l'aluminium anodisé.

L'échangeur conforme à l'invention peut être utilisé dans une application HVAC de chauffage, ventilation et conditionnement d'air domestique ou industrielle.

Dans cet usage, le circuit primaire est connecté à des panneaux solaires thermiques, le premier circuit secondaire peut être connecté à un circuit de production d'eau chaude avec réservoir de stockage, le deuxième circuit secondaire à une installation de chauffage et/ou de réfrigération, par exemple un circuit frigorifique ou une pompe à chaleur et le troisième circuit secondaire à une installation de ventilation mécanique contrôlée.

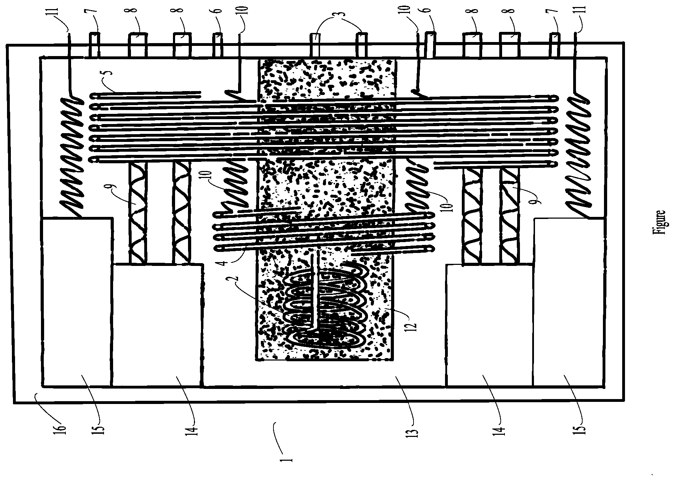

La figure en annexe représente schématiquement un échangeur conforme à l'invention comprenant trois surfaces d'échange secondaire de type différent.

Un serpentin 2 en acier inoxydable austénitique au molybdène UNS S31603 est noyé dans une masse compacte de matériau de haute capacité thermique en carbure de silicium 12. Le serpentin 2 est connecté par les tubulures 3 à une source de chaleur fournie par au moins un capteur de panneau solaire thermique. Il représente la surface d'échange primaire de l'échangeur 1. L'ensemble serpentin 2 et la masse de carbure de silicium 12 constitue le noyau de l'échangeur 1.

Un autre serpentin 4 en acier inoxydable austénitique au molybdène UNS S31603 représente la première surface d'échange secondaire et est connecté à un circuit utilisateur de génération d'eau chaude 6. Ce serpentin 4 est noyé dans un béton 13 constitué de 90 % en poids de granules de carbure de silicium et 10 % en poids de ciment Portland. Une première résistance électrique 10 est aussi noyée dans le béton 13 et permet le chauffage de la masse de haute capacité thermique lorsque le rayonnement solaire vient à manquer. Un troisième serpentin 5 en polyéthylène haute densité représente la deuxième surface d'échange secondaire et est connecté à un autre circuit utilisateur, le circuit frigorifique 7 d'une pompe à chaleur pour le chauffage d'un bâtiment. Le serpentin 5 est noyé dans un béton 15 de même composition que le béton 13. Un faisceau de tubes en aluminium anodisé 9 est aussi noyé dans un béton 14 de même composition que les bétons 13 et 15. Ce faisceau représente la troisième surface d'échange secondaire de l'échangeur 1 et est connecté à un circuit de ventilation mécanique contrôlée.

Une autre résistance électrique 11 est noyée dans la masse du béton 15 et permet aussi un appoint en calories en cas de nécessité.

Enfin une jaquette 16 en matériau isolant recouvre la totalité des surfaces extérieures de l'échangeur 1.

## Revendications

1. Echangeur de chaleur (1) pour capteur solaire thermique comprenant une surface d'échange primaire pouvant être connectée avec au moins un capteur solaire thermique et au moins une première surface d'échange secondaire pouvant être connectée à un circuit utilisateur, **caractérisé en ce que** la surface d'échange primaire est noyée dans un matériau de haute capacité thermique comprenant une masse de carbure de silicium (12) pour former un noyau, a première surface d'échange secondaire étant noyée dans un béton (13) comprenant du carbure de silicium, ledit béton et ladite première surface d'échange secondaire entourant ledit noyau.

2. Echangeur de chaleur selon la revendication 1, **caractérisé en ce que** le noyau comprend un mélange homogène de carbure de silicium et d'une résine de contact.

3. Echangeur de chaleur selon l'une des revendications 1 ou 2, **caractérisé en ce que** la surface d'échange primaire est formée d'un serpentin tubulaire (2), notamment en acier inoxydable.

4. Echangeur de chaleur selon l'une quelconque des revendications 1 à 3, **caractérisé en ce que** la première surface d'échange secondaire est formée d'un serpentin Tubulaire (4), notamment en acier inoxydable, qui est disposé en périphérie du noyau.

5. Echangeur de chaleur selon l'une quelconque des revendications 1 à 4, **caractérisé en ce que** le béton de carbure de silicium comprend un mélange homogène de carbure de silicium et d'un mortier de ciment.

6. Echangeur de chaleur selon l'une quelconque des revendications 1 à 5, **caractérisé en ce qu'**il comprend au moins une deuxième surface d'échange secondaire, notamment plusieurs autres surfaces d'échanges secondaire connectées chacune à un circuit utilisateur.

7. Echangeur de chaleur selon la revendications 6, **caractérisé en ce qu'**au moins une des autres deuxièmes surfaces d'échange secondaire est noyée dans un matériau de haute capacité thermique comprenant du carbure de silicium.

8. Echangeur de chaleur selon l'une des revendications 6 ou 7, **caractérisé en ce que** la deuxième surface d'échange secondaire entoure le béton (13).

9. Echangeur de chaleur selon l'une quelconque des revendication 6 à 8, **caractérisé en ce que** les surfaces d'échange secondaire sont connectées à des circuits utilisateurs de nature différente.

10. Echangeur de chaleur selon l'une quelconque des revendications 1 à 9, **caractérisé en ce qu'**au moins un circuit utilisateur est sélectionné parmi :

    • un circuit producteur d'eau chaude (6) ;
    • un circuit de chauffage par pompe à chaleur (7) ; et
    • un circuit de récupération calorifique de ventilation (8).

11. Echangeur de chaleur selon une quelconque des revendications 1 à 10, **caractérisé en ce qu'**au moins une résistance électrique chauffante (10, 11) est noyée dans le béton (13) et/ou dans l'éventuel matériau dans lequel au moins une deuxième surface d'échange secondaire est noyée.

12. Procédé de fabrication d'un échangeur de chaleur (1) selon une quelconque des revendications 1 à 11, **caractérisé en ce qu'**il comprend les étapes suivantes :

    - introduction et fixation de la surface d'échange primaire dans un premier moule ;
    - coulée de granules de carbure de silicium dans ledit premier moule pour former le noyau
    - démoulage du noyau de l'échangeur (1) ;
    - fixation de la première surface d'échange secondaire en périphérie du noyau ;
    - introduction et fixation dans un deuxième moule de l'ensemble première surface d'échange secondaire et noyau ;
    - coulée dans l'espace entre le noyau et le deuxième moule d'un mélange homogène de granules de carbure de silicium et d'un mortier de ciment ;
    - étuvage de l'ensemble deuxième moule / mortier de ciment avec granules de carbure de silicium / première surface d'échange secondaire noyau, pour former un béton (13) de carbure de silicium autour du noyau et de la première surface d'échange secondaire

- démoulage de l'ensemble béton (13) / première surface d'échange secondaire noyau afin d'obtenir un échangeur comprenant au moins une première surface d'échange secondaire entourant la surface d'échange primaire dans son noyau.

13. Procédé selon la revendication 12, **caractérisé en ce qu'**on choisit au moins un serpentin tubulaire (2) en acier inoxydable pour la surface d'échange primaire.

14. Procédé selon l'une des revendications 12 ou 13, **caractérisé en ce que** la surface d'échange primaire est introduite dans l'axe d'un premier moule cylindrique, ladite surface étant fixée dans ce moule au moyen d'un squelette de fils fins en acier inox.

15. Procédé selon l'une quelconque des revendications 12 à 14, **caractérisé en ce qu'**on coule dans le premier moule un mélange homogène de granules de carbure de silicium et d'une résine de contact.

16. Procédé selon l'une quelconque des revendications 12 à 15, **caractérisé en ce qu'**on fixe au moins un premier serpentin (4) représentant la première surface d'échange secondaire en périphérie du noyau.

17. Procédé selon l'une quelconque des revendications 12 à 16, **caractérisé en ce que** l'ensemble première surface d'échange secondaire et noyau est introduit et fixé dans l'axe d'un deuxième moule cylindrique.

18. Procédé selon l'une quelconque des revendications 12 à 17, **caractérisé en ce que** le premier moule est un moule perdu réalisé en béton armé de carbure de silicium.

19. Procédé selon l'une quelconque des revendications 12 à 18, **caractérisé en ce qu'**on ajoute au moins une deuxième surface d'échange secondaire.

20. Utilisation de l'échangeur de chaleur (1) selon une quelconque des revendications 1 à 11 dans une application HVAC de chauffage, ventilation et conditionnement d'air domestique ou industrielle.


**Patentansprüche**

1. Wärmetauscher (1) für einen thermischen Sonnenkollektor, der eine primäre Austauschfläche umfasst, die mit mindestens einem thermischen Sonnenkollektor verbunden werden kann, und mindestens eine erste sekundäre Austauschfläche, die mit einem Verbraucherkreis verbunden werden kann,

**dadurch gekennzeichnet, dass** die primäre Austauschfläche in ein Material mit hoher Wärmekapazität eingebettet ist, das eine Masse aus Siliziumkarbid (12) umfasst, um einen Kern zu bilden, wobei die erste sekundäre Austauschfläche in einen Beton (13) eingebettet ist, der Siliziumkarbid umfasst, wobei der Beton und die erste sekundäre Austauschfläche den Kern umgeben.

2. Wärmetauscher nach Anspruch 1, **dadurch gekennzeichnet, dass** der Kern eine homogene Mischung aus Siliziumkarbid und einem Kontaktharz umfasst.

3. Wärmetauscher nach einem der Ansprüche 1 oder 2, **dadurch gekennzeichnet, dass** die primäre Austauschfläche von einer Rohrschlange (2), insbesondere aus rostfreiem Stahl, gebildet wird.

4. Wärmetauscher nach einem der Ansprüche 1 bis 3, **dadurch gekennzeichnet, dass** die erste sekundäre Austauschfläche von einer Rohrschlange (4), insbesondere aus rostfreiem Stahl, gebildet wird, die am Umfang des Kerns angeordnet ist.

5. Wärmetauscher nach einem der Ansprüche 1 bis 4, **dadurch gekennzeichnet, dass** der Siliziumkarbid-Beton eine homogene Mischung aus Siliziumkarbid und einem Zementmörtel umfasst.

6. Wärmetauscher nach einem der Ansprüche 1 bis 5, **dadurch gekennzeichnet, dass** er mindestens eine zweite sekundäre Austauschfläche, insbesondere mehrere weitere sekundäre Austauschflächen umfasst, die jeweils mit einem Verbraucherkreis verbunden werden.

7. Wärmetauscher nach Anspruch 6, **dadurch gekennzeichnet, dass** mindestens eine der weiteren zweiten sekundären Austauschflächen in ein Material mit hoher Wärmekapazität eingebettet ist, das Siliziumkarbid umfasst.

8. Wärmetauscher nach einem der Ansprüche 6 oder 7, **dadurch gekennzeichnet, dass** die zweite sekundäre Austauschfläche den Beton (13) umgibt.

9. Wärmetauscher nach einem der Ansprüche 6 bis 8, **dadurch gekennzeichnet, dass** die sekundären Austauschflächen mit Verbraucherkreisen unterschiedlicher Art verbunden werden.

10. Wärmetauscher nach einem der Ansprüche 1 bis 9, **dadurch gekennzeichnet, dass** mindestens ein Verbraucherkreis ausgewählt ist aus:

   - einem Warmwassererzeugungskreis (6);
   - einem Wärmepumpen-Heizkreis (7); und

- einem Kreis zur Wärmerückgewinnung aus der Lüftung (8).

11. Wärmetauscher nach einem der Ansprüche 1 bis 10, **dadurch gekennzeichnet, dass** mindestens ein elektrischer Heizwiderstand (10, 11) in den Beton (13) und/oder in das eventuelle Material eingebettet ist, in das mindestens eine zweite sekundäre Austauschfläche eingebettet ist.

12. Verfahren zur Herstellung eines Wärmetauschers (1) nach einem der Ansprüche 1 bis 11, **dadurch gekennzeichnet, dass** es die folgenden Schritte umfasst:

- Einbringen und Befestigen der primären Austauschfläche in einer ersten Form;
- Gießen von Siliziumkarbidgranulat in die erste Form, um den Kern zu bilden;
- Ausformen des Kerns des Wärmetauschers (1);
- Befestigen der ersten sekundären Austauschfläche am Umfang des Kerns;
- Einbringen und Befestigen der Baugruppe aus erster sekundärer Austauschfläche und Kern in einer zweiten Form;
- Gießen einer homogenen Mischung aus Siliziumkarbidgranulat und einem Zementmörtel in den Raum zwischen dem Kern und der zweiten Form;
- Ausheizen der Baugruppe aus zweiter Form / Zementmörtel mit Siliziumkarbidgranulat / erster sekundärer Austauschfläche / Kern, um einen Siliziumcarbid-Beton (13) um den Kern und die erste sekundäre Austauschfläche zu bilden,
- Ausformen der Baugruppe aus Beton (13) / erster sekundärer Austauschfläche / Kern, um einen Wärmetauscher zu erhalten, der mindestens eine erste sekundäre Austauschfläche umfasst, die die primäre Austauschfläche in seinem Kern umgibt.

13. Verfahren nach Anspruch 12, **dadurch gekennzeichnet, dass** für die primäre Austauschfläche mindestens eine Rohrschlange (2) aus rostfreiem Stahl gewählt wird.

14. Verfahren nach einem der Ansprüche 12 oder 13, **dadurch gekennzeichnet, dass** die primäre Austauschfläche in der Achse einer ersten zylindrischen Form eingebracht wird, wobei die Fläche mittels eines Gerüsts aus feinen Drähten aus rostfreiem Stahl in dieser Form befestigt wird.

15. Verfahren nach einem der Ansprüche 12 bis 14, **dadurch gekennzeichnet, dass** in die erste Form eine homogene Mischung aus Siliziumkarbidgranulat und einem Kontaktharz gegossen wird.

16. Verfahren nach einem der Ansprüche 12 bis 15, **dadurch gekennzeichnet, dass** mindestens eine erste Schlange (4), die die erste sekundäre Austauschfläche darstellt, am Umfang des Kerns befestigt wird.

17. Verfahren nach einem der Ansprüche 12 bis 16, **dadurch gekennzeichnet, dass** die Baugruppe aus erster sekundärer Austauschfläche und Kern in der Achse einer zweiten zylindrischen Form eingebracht und befestigt wird.

18. Verfahren nach einem der Ansprüche 12 bis 17, **dadurch gekennzeichnet, dass** es sich bei der ersten Form um eine verlorene Form handelt, die aus mit Siliziumkarbid bewehrtem Beton hergestellt ist.

19. Verfahren nach einem der Ansprüche 12 bis 18, **dadurch gekennzeichnet, dass** mindestens eine zweite sekundäre Austauschfläche hinzugefügt wird.

20. Verwendung des Wärmetauschers (1) nach einem der Ansprüche 1 bis 11 in einer HLK-Anwendung zur Heizung, Lüftung und Klimatisierung in Haushalt oder Industrie.

**Claims**

1. Heat exchanger (1) for a thermal solar collector, comprising a primary exchange surface able to be connected with at least one thermal solar collector and at least one first secondary exchange surface able to be connected to a user circuit, **characterised in that** the primary exchange surface is embedded in a material with a high thermal capacity comprising a mass of silicon carbide (12) in order to form a core, the first secondary exchange surface being embedded in a concrete (13) comprising silicon carbide, said concrete and said first secondary exchange surface surrounding said core.

2. Heat exchanger according to claim 1, **characterised in that** the core comprises a homogeneous mixture of silicon carbide and a contact resin.

3. Heat exchanger according to one of claims 1 or 2, **characterised in that** the primary exchange surface is formed by a tubular coil (2), in particular made from stainless steel.

4. Heat exchanger according to any one of claims 1 to 3, **characterised in that** the first secondary exchange surface is formed by a tubular coil (4), in particular made from stainless steel, which is disposed at the periphery of the core.

5. Heat exchanger according to any one of claims 1 to 4, **characterised in that** the silicon-carbide concrete comprises a homogeneous mixture of silicon carbide and a cement mortar.

6. Heat exchanger according to any one of claims 1 to 5, **characterised in that** it comprises at least one secondary exchange surface, in particular a plurality of other secondary exchange surfaces, each connected to a user circuit.

7. Heat exchanger according to claim 6, **characterised in that** at least one of the other second secondary exchange surfaces is embedded in a material with a high thermal capacity comprising silicon carbide.

8. Heat exchanger according to one of claims 6 or 7, **characterised in that** the second secondary exchange surface surrounds the concrete (13).

9. Heat exchanger according to any one of claims 6 to 8, **characterised in that** the secondary exchange surfaces are connected to user circuits of different natures.

10. Heat exchanger according to any one of claims 1 to 9, **characterised in that** at least one user circuit is selected from:

    • a circuit producing hot water (6);
    • a heating circuit by heat pump (7); and
    • a calorific-recovery ventilation circuit (8).

11. Heat exchanger according to any one of claims 1 to 10, **characterised in that** at least one heating electrical element (10, 11) is embedded in the concrete (13) and/or in any material in which at least one second secondary exchange surface is embedded.

12. Method for manufacturing a heat exchanger (1) according to any one of claims 1 to 11, **characterised in that** it comprises the following steps:

    - introducing and fixing the primary exchange surface in a first mould;
    - pouring silicon carbide granules into said first mould in order to form the core;
    - removing the core of the exchanger (1) from the mould;
    - fixing the first secondary exchange surface at the periphery of the core;
    - introducing and fixing in a second mould of the first secondary exchange surface and core assembly;
    - pouring into the space between the core and the second mould a homogeneous mixture of silicon carbide granules and of a cement mortar;
    - stoving the second mould and cement mortar assembly with silicon carbide granules, first secondary exchange surface and core, in order to form a silicon carbide concrete (13) around the core and the first secondary exchange surface;
    - removing the concrete (13), first secondary exchange surface and core assembly from the mould in order to obtain an exchanger comprising at least one first secondary exchange surface surrounding the primary exchange surface in its core.

13. Method according to claim 12, **characterised in that** at least one tubular coil (2) made from stainless steel is chosen for the primary exchange surface.

14. Method according to one of claims 12 or 13, **characterised in that** the primary exchange surface is introduced into the axis of a first cylindrical mould, said surface being fixed in this mould by means of a skeleton of fine stainless-steel wires.

15. Method according to any one of claims 12 to 14, **characterised in that** a homogeneous mixture of silicon carbide granules and a contact resin is poured into the first mould.

16. Method according to any one of claims 12 to 15, **characterised in that** at least one first coil (4) representing the first secondary exchange surface is fixed at the periphery of the core.

17. Method according to any one of claims 12 to 16, **characterised in that** the first secondary exchange surface and core assembly is introduced and fixed in the axis of a second cylindrical mould.

18. Method according to any one of claims 12 to 17, **characterised in that** the first mould is a break mould produced from concrete reinforced with silicon carbide.

19. Method according to any one of claims 12 to 18, **characterised in that** at least one secondary exchange surface is added.

20. Use of the heat exchanger (1) according to any one of claims 1 to 11 in a domestic or industrial HVAC application for heating, ventilation and air conditioning.

Figure

**EP 3 491 320 B1**

## RÉFÉRENCES CITÉES DANS LA DESCRIPTION

**Documents brevets cités dans la description**

- US 7441558 B2

- DE 202013005661 U1